# EUROPEAN PATENT SPECIFICATION

(11) **EP 0 591 961 B1**
(45) Date of publication and mention of the grant of the patent: **03.02.1999**
(21) Application number: 93116198.8
(22) Date of filing: 06.10.1993
(51) Int. Cl.: H04B 10/14, H04J 14/02

(54) **Fiber optic communication terminal, fiber optic communication system, and its wavelength setting method**
Faseroptisches Kommunikationsendgerät, faseroptisches Übertragungssystem und Verfahren zur Einstellung der Wellenlänge
Terminal de communication pour fibres optiques, système de communication par fibres optiques et méthode de réglage de sa longueur d'onde

(30) Priority: 09.10.1992 JP 271272/92
(43) Date of publication of application: 13.04.1994
(73) Proprietor: MATSUSHITA ELECTRIC INDUSTRIAL CO., LTD., Kadoma-shi, Osaka 571-8501 (JP)
(72) Inventor: Utsumi, Kuniaki, Sansa-shi, 669-13 Hyogo (JP); Yamamoto, Hiroaki, Higashiosaka-shi, 578 Osaka (JP); Fujito, Katsuyuki, Higashiosaka-shi, 577 Osaka (JP)
(74) Representative: Grünecker, Kinkeldey, Stockmair & Schwanhäusser Anwaltssozietät

(56) References cited:
- EP-A- 0 352 747
- ELECTRONICS LETTERS. vol. 25, no. 1 , 5 January 1989 , STEVENAGE GB pages 9 - 11 M.W.MAEDA ET AL 'Absolute Frequency Identification and Stabilisation of DFB Lasers in 1.5 micrometer Region'
- 14TH EUROPEAN CONFERENCE ON OPTICAL COMMUNICATION (ECOC 88) vol. 1 , 11 September 1988 , BRIGHTON,UK pages 74 - 77 I.MITO ET AL 'Frequency tunable Laser Diodes and their Application to Coherent System'
- ELECTRONICS LETTERS. vol. 27, no. 25 , 5 December 1991 , STEVENAGE GB pages 2336 - 2337 H.TSUSHIMA ET AL '1.244 Gbit/s 32 Channel 121 km Transmission Experiment using Shelf-mounted Continuous-phase FSK Optical Heterodyne System'

## Description

### SPECIFICATION

### FIELD OF THE INVENTION

The present invention relates to a fiber optic communication terminal for mixing light signals from plural terminals, transmitted through optical fibers, and received at one control terminal, in a fiber optic communication system composed of a plurality of said fiber optic communication terminals, and a setting method of output light signal wavelength in said fiber optic communication system.

### BACKGROUND OF THE INVENTION

A conventional fiber optic communication terminal is disclosed, for example, by Shibutani et al. in "Wide area video monitoring systems with subcarrier multiplex optical multi-access technique," Fall Meeting Issue B-711 of The institute of electronics, information and communication engineers 1992.

In the case of the conventional fiber optic communication system using this fiber optic communication terminal, light signals from fiber optic communication terminals are mixed, which are finally sent to the center station as one light signal. Although the light signals from the fiber optic communication terminals are mixed to be one light signal, since each fiber optic
communication terminal modulates the light signal by an electric signal individually differing in the carrier frequency, it is same as when multiplexed by frequency division on the mixed light signal. Therefore, at the center station, since the frequency of the carrier assigned to each fiber optic communication terminal is known, the signals from the individual fiber optic communication terminals can be distinguished on the frequency axis of the received electric signal. Or when modulated by spread spectrum method, it is possible to distinguish the signals from the individual fiber optic communication terminals by demodulating accordingly at the center station.

In such constitution, however, if the wavelengths of light signals from the fiber optic communication terminals are close to each other, as the light signals interfere, beat interference occurs, which may adversely affect the signals. Generally, when two light signals interfere, and they are converted into electric signals, a signal of differential frequency of the two light signal frequencies is generated, and it is called beat interference or beat noise. If the frequency of this beat interference overlaps with the band of modulated signal, the modulated signal is influenced as a matter of course. Therefore, to prevent occurrence of this beat interference, it is necessary to set apart the wavelength of each light signal from each other. The separating distance of wavelength may be set so that beat interference may take place at a much higher frequency than the band of the modulated signal. For this purpose, the problem is that the light source must be selected so that the wavelengths of light sources of all fibre optic communication terminals be mutually different by more than a specific value.

From EP-A-0 352 747 a system for stabilising a frequency separation between two coherent light sources is known including first and second current sources driving first and second semi-conductor laser devices with first and second frequencies, respectively. Light from the semi-conductor laser devices is combined in a multiplexer, and a portion of the combined light is diverted to an optical-to-electrical transducer. The output current of the transducer is combined with an output of a local oscillator driven at a selected frequency. A combined signal is then filtered and used to form a control signal of one of the semi-conductor laser devices. The aim of this system is to keep the beat frequency of the two laser devices at a certain value because otherwise coherent light transmitting cannot be demodulated. Therefore, the known structure is adapted for detecting a signal frequency generated by beat, and changing the wavelength responsive to the detected frequency until the frequency reaches a specified value. When the frequency becomes stable, the corresponding wavelength difference is to be kept.

From the 14th European Conference on Optical Communication (ECOC 88), vol. 1, September 11th, 1988, Brighton, U.K., pages 74-77, I. Mito et al "Frequency Tunable Laser Diodes and their Application to Coherent System" semi-conductor diodes with wavelengths variable functions are known.

According to a report in "Electronic Letters", vol. 27, no. 25, December 5th, 1991, Stevenage, G. B., pages 2336 to 2337, by H. Tsushima et al "1.244 Gbit/s 32 channel 121 km Transmission Experiment using Shelf-mounted Continuous-phase FSK Optical Heterodyne System". The wavelength of a local laser diode is controlled by changing the temperature of the laser diode module.

### Summary of the Invention.

It is the object of the invention to present a fibre optic communication terminal capable of preventing occurrence of beat interference by controlling the wavelength of a light source at the own station when mixing two light signals, in a fibre optic communication system coupling a plurality of this fibre optic communication terminals, and a method of setting the wavelengths of light signals from the fibre optic communication terminals at high density.

This object is achieved by the apparatus features set forth in claim 1 and by the method steps set forth in claim 14, respectively. A modification of the method of claim 14 is set forth in claim 15. Preferred embodiments are subject matter of the respective dependent claims.

In the invention having such constitution, a part of the light signals mixed in the light mixing part is taken out by the light branching part, and increase of noise level due to beat interference or occurrence of bit error is detected by the detecting part, and the output light wavelength of the light source part in the own station is controlled, thereby preventing occurrence of beat interference. In the fiber optic communication system consisting of plural sets of the fiber optic communication terminal, by controlling the wavelength so that the noise level or bit error rate may be the set value, the wavelengths of output light of the fiber optic communication terminals on the entire system are arranged at high density.

As explained herein, in the invention, since the wavelengths of the light source parts of the terminals are automatically controlled so as not to generate beat interference, it is not necessary to prepare light source parts selected depending on the difference in the wavelength beforehand, nor is it necessary to add fiber optic communication terminals, or prepare light source parts selected depending on the difference in the wavelength even when replacing a defective light source part. Moreover, the wavelength array at high density is easily realized, and its practical effects are great.

### BRIEF DESCRIPTION OF THE DRAWINGS

Fig. 1 is a block diagram showing a fiber optic communication terminal in an embodiment of the invention.

Fig. 2 is a system block diagram of a fiber optic communication system in an embodiment of the invention.

Fig. 3 is a detailed block diagram of a light source part for controlling the output of semiconductor laser in an embodiment of the invention.

Fig. 4 is a detailed block diagram of a light source part for controlling the temperature of semiconductor laser in an embodiment of the invention.

Fig. 5 is a frequency spectrum of signal when detecting noise level in the detecting part of the fiber optic communication terminal in an embodiment of the invention.

Fig. 6 is a frequency spectrum of signal when detecting bit error rate in the detecting part of the fiber optic communication terminal in an embodiment of the invention.

Fig. 7 is a frequency spectrum of signal when adding a signal for detection in the detecting part of the fiber optic communication terminal in an embodiment of the invention.

Fig. 8 is a system block diagram of fiber optic communication system to be connected in a ring in an embodiment of the invention.

### DETAILED DESCRIPTION OF THE EMBODIMENT

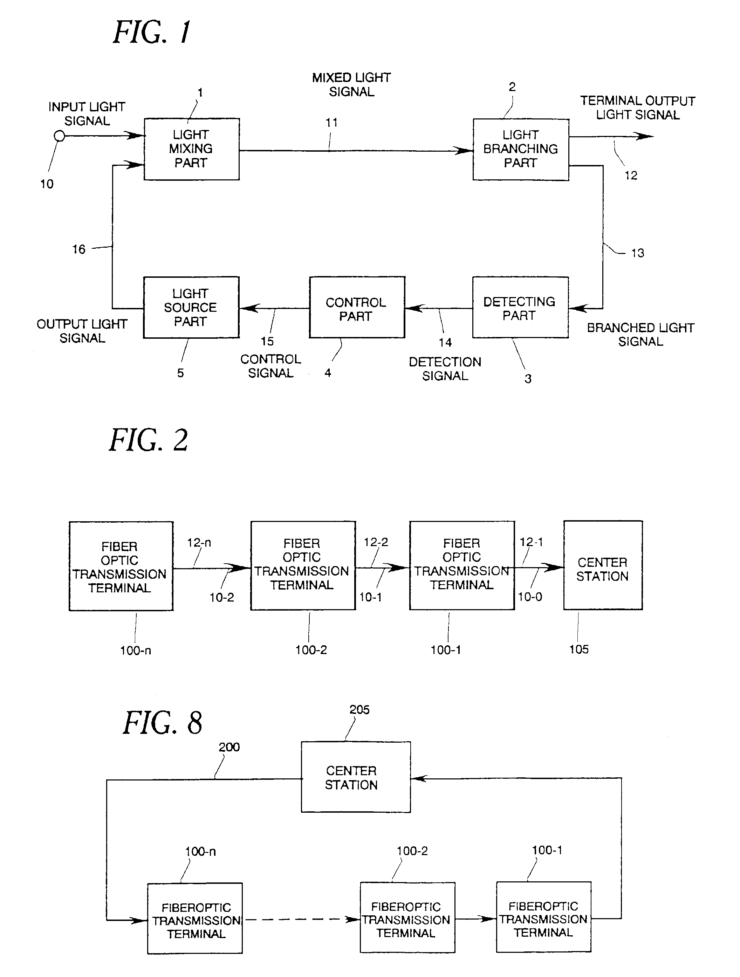

Fig. 1 is a block diagram of a fiber optic communication terminal in an embodiment of the invention. A block diagram of an entire system using a plurality of those fiber optic communication terminals is shown in Fig. 2.

In Fig. 1, numeral 10 denotes an input light signal from other terminal, 1 is a light mixing part for mixing the input light signal 10 and an output light signal 16 of this terminal, 11 is a mixed light signal of the output of the light mixing part 1, 2 is a light branching part for branching the mixed light signal 11 into two, 12 is a terminal output light signal of this terminal as one of the outputs of the light branching part 2, 13 is a branched light signal as the other output of the light branching part 2, 3 is a detecting part for detecting deterioration of signal quality of the branched light signal 13, 14 is a detection signal which is an output of the detecting part 3, 4 is a controlling part for controlling the light source part depending on the detection signal 14, 15 is a control signal which is an output of the controlling part 4, and 5 is a light source part for generating an output light signal 16 by receiving the control signal 15. As a matter of course, the light source part 5 possesses a function of modulating the output light signal 16 by the signal to be delivered which is not shown herein.

In Fig. 2, numerals 100-1 to 100-n represent fiber optic communication terminals connected in cascade through optical fibers, 105 is a center station located at the most upstream position for collecting information from the fiber optic communication terminal 100-1 to the fiber optic communication terminal 100-n, 12-1 to 12-n are terminal output light signals of the fiber optic communication terminals 100-1 to 100-n respectively, 10-1, 10-2 are input light signals of the fiber optic communication terminals 100-1, 100-2, respectively, and 10-0 is a center input light signal into the center station 105. The terminal output light signal and the corresponding input light terminal of the next terminal, for example, the terminal output light signal 12-2 of fiber optic communication terminal 100-2 and input light signal 10-1 of fiber optic communication terminal 100-1, or terminal output light signal 12-1 of fiber optic communication terminal
100-1 and center input light signal 10-0 of center station 105 differ from each other by the portion of transmission deterioration such as transmission loss, but generally they may be regarded to be the same in the invention.

In the embodiment, since the fiber optic communication terminal 100-n is at the most downstream side away from the center station, the input light signal to the fiber optic communication terminal 100-n does not exist.

In thus composed fiber optic communication terminals of the embodiment and the entire system using them, the operation is described below.

The input light signal 10 from the downstream side terminal and the modulated output light signal 16 from the light source part 5 at this terminal are mixed in the light mixing part 1. The mixed light signal 11 is branched into two light signals by the light branching part 2. The branching ratio is determined at the optimum value by the individual system. Of the outputs from the light branching part 2, one is transmitted to the upstream side terminal or the center station as terminal output light signal 12. The other branched light signal 13 is sent to the detecting part 3. The detecting part 3 converts the branched light signal 13 into an electric signal, and monitors the signal quality of the branched light signal 13, and detects the quality level. The result is sent to the control part 4 as detection signal 14. The control part 4 sends a control signal 15 for controlling the light source part 5 depending on the detection signal 14 to the light source part 5. The light source part 5 is controlled led by the control signal 15, and varies the wavelength of its output light signal 16.

In the light mixing part 1, when the wavelengths of the input light signal 10 and output light signal 16 are close to each other and beat interference occurs, the signal quality of the branched light signal 13 which is a part of the mixed light signal 11 deteriorates. This deterioration is detected by the detecting part 3, and therefore the wavelength of the output light signal 16 from the light source part 5 is varied through the control part 4 in a direction of not causing beat interference. In order that the signal quality of the branched light signal 13 may not deteriorate, the wavelength of the output light signal 16 from the light source part 5 is controlled, and consequently beat interference does not take place in the terminal output light signal 12, either.

On the entire system, since the fiber optic communication terminals 100-1 to 100-n are connected in cascade, as far as the fiber optic communication terminals 100-1 to 100-n operate individually as described above, beat interference will not occur in each fiber optic communication terminal, and finally the center station 105 can receive the center input light signal 10-0 free from beat interference.

Since the fusion type optical coupler is fabricated by fusing optical fiber, it is of two-input, two-output type when fabricated from two optical fibers. Therefore, the both functions of the light mixing part 1 and light branching part 2 can be simultaneously realized by using a fusion type optical coupler. It is, however, generally difficult to set the mixing ratio and branching ratio independently at desired values. Or by using an waveguide type optical coupler, too, the both functions of the light mixing part 1 and light branching part 2 can be realized simultaneously. What is more, in the waveguide type optical coupler, the mixing ratio and branching ratio can be set independently.

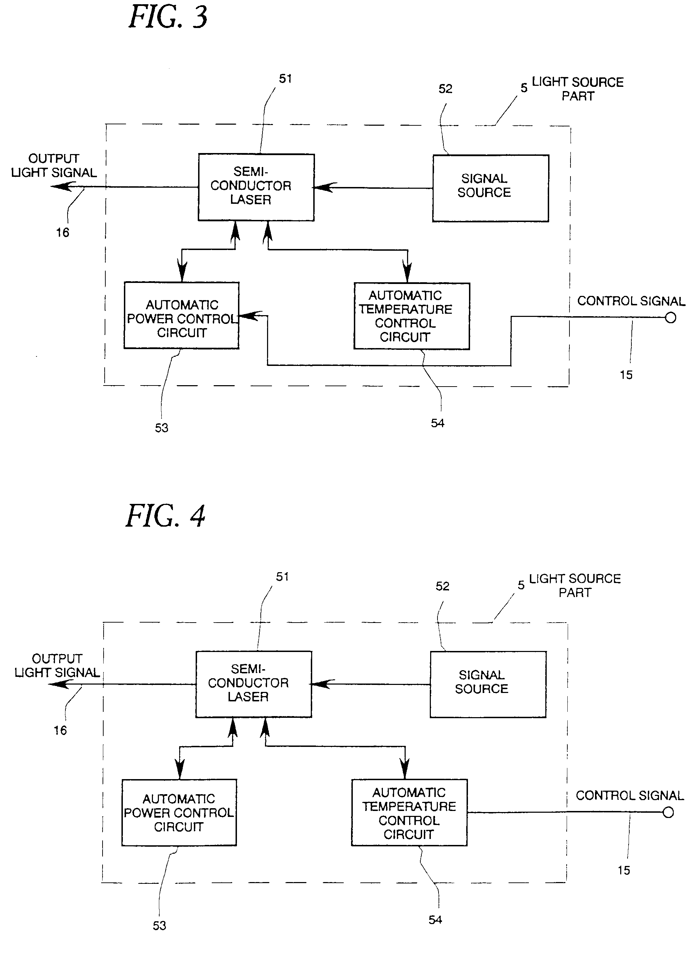

When semiconductor laser is used as the light source of the light source part 5, to vary the wavelength of the output light of semiconductor laser, an easy method is to change the quantity of current flowing in the semiconductor laser or change the temperature of the semiconductor laser. Generally, the semiconductor laser is stabilized in its bias current and temperature, and the circuits for these purposes are respectively automatic power control circuit and automatic temperature control circuit. Therefore, when the control part 4 is designed to control the target output set value of the automatic power control circuit, or the target temperature set value of the automatic temperature control circuit by the control signal 15, the wavelength of the output light signal 16 which is the output of the semiconductor can be easily varied. Fig. 3 is a detailed block diagram of the light source part 5 when changing the wavelength of the output light signal 16 by controlling the bias current of the semiconductor laser by the control signal 15, and Fig. 4 is a detailed block diagram of the light source part 5 when changing the wavelength of the output light signal 16 by controlling the temperature of the semiconductor laser by the control signal 15. In Figs. 3 and 4, numeral 51 denotes a semiconductor laser, 52 is a signal source, 53 is an automatic power control circuit, and 54 is an automatic temperature control circuit.

The signal source 52 represents the entire function for producing an electric signal that the fiber optic communication terminal delivers the light signal 16 as carrier, and modulating the semiconductor laser 51, or, depending on the case, the function of modulating the semiconductor laser 51 by an external signal.

The automatic power control circuit 53 detects the output of the semiconductor laser 51, that is, the output level of the output light signal 16, and stabilizes the output level to be a target output set value. Similarly, the automatic temperature control circuit 54 detects the temperature of the semiconductor laser 51, and stabilizes the value to be a target temperature set value.

In the case of Fig. 3, when the target output set value of the automatic power control circuit 53 is changed by the control signal 15, the automatic power control circuit 53 accordingly varies the bias current of the semiconductor laser 51. As a result, the output level of the output light signal 16 of the semiconductor laser is changed. When the output level is changed, the wavelength of the output light signal 16 is changed at the same time. By this series of action, the wavelength of the output light signal 16 can be controlled by the control signal 15.

In the case of Fig. 4, when the target temperature set value of the automatic temperature control circuit 54 is changed by the control signal 15, the automatic temperature control circuit 54 accordingly changes the temperature of the semiconductor laser 51. As a result, the wavelength of the output light signal 16 of the semiconductor laser is changed. By this action, the wavelength of the output light signal 16 can be controlled by the control signal 15.

In this method, the wavelength may be easily controlled in a range not to affect the signal quality or reliability of semiconductor laser.

As the light source of the light source part 5, when a wavelength variable light source, for example, a semiconductor laser with external resonator is used, the control part 4 mechanically controls the external resonator by the control signal 15, thereby varying the wavelength of the output light signal 16 which is the output of the semiconductor laser with external resonator.

Or, as the light source of the light source part 5, when a wavelength variable multiple-electrode semiconductor laser is used, the control part 4 controls the current to the control electrode of the multiple-electrode semiconductor laser, thereby varying the wavelength of the output light signal 16 which is the multiple-electrode semiconductor laser output.

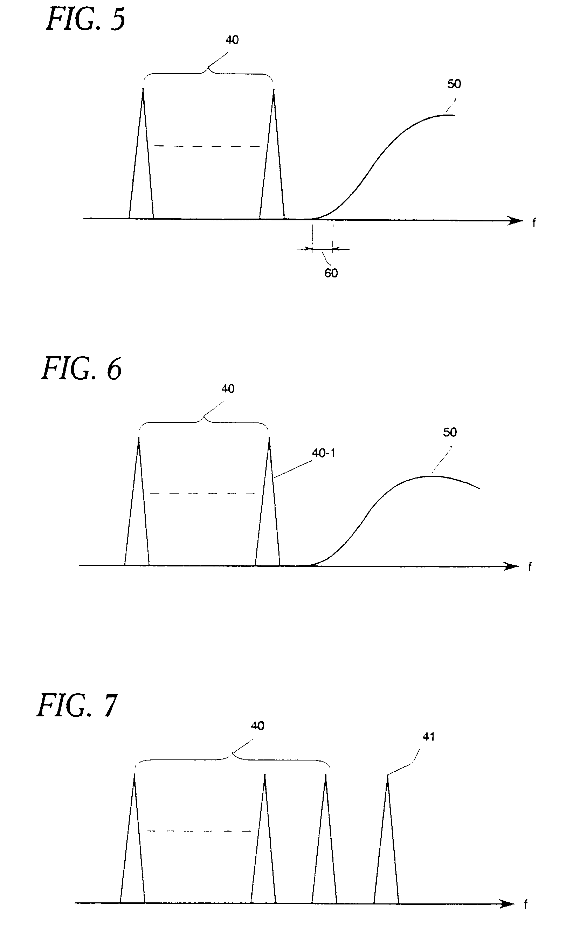

As the method of detection of deterioration of signal quality of the branch output 13 in the detecting part 3, detection of noise level or bit error is known. When detecting the noise level, the detecting part 3 detects the power in a specific band, and controls the wavelength of the output light signal 16 so that the level may be lower than the set value or maintained at the set value. The band for monitoring the noise level should be set at high frequency as far as possible. This is because, when the wavelength is gradually changed from the normal state to induce beat interference, the effect of beat interference begins to appear from higher frequency. This mode is explained by reference to the frequency spectrum in Fig. 5. Fig. 5 shows a frequency spectrum of electric signal when the branched light signal 13 is demodulated into an electric signal in the detecting part 3. In Fig. 5, numeral 40 is a transmission signal to be transmitted originally, 50 is a disturbing wave by beat interference, and 60 is a monitoring band for monitoring noise level. In the state of Fig. 5, it is supposed that the effect of the disturbing wave 50 on the transmission signal 40 is at a negligible limit level. If the disturbing wave 50 approaches a lower frequency band than this state on the frequency axis, that is, to the transmission signal 40 until the foot of the disturbing wave 50 is detected as increase of noise level in the monitoring band 60, the light source part 5 is controlled through the control part 4, and the wavelength of the output light signal 16 is changed so that the noise level may not increase further. Therefore, the spectral relation as shown in Fig. 5 is maintained, and the effect of the disturbing wave 50 on the transmission signal 40 is maintained at a negligible level. Hence, by monitoring the noise level in higher frequency band, the effect on the transmission signal 40 becomes smaller, and it is desired to set the monitoring band 60 at high frequency as far as possible. This method requires only monitoring of noise level, and does not depend on the signal format, and if using spread spectrum signal, this method can be applied as far as the signal band and the noise level monitoring band are separated.

The monitoring band may be set in the same frequency band or in different bands in the individual fiber optic communication terminals. However, when setting in the same frequency band, the time constant of response or setting of noise level at each fiber optic communication terminal must be adjusted in each fiber optic communication terminal.

When detecting increase of bit error, the principle of operation is almost same as in the case by the noise level, and a bit error of a specific digital data is detected, and the wavelength of the output light signal 16 is controlled so that the bit error rate may be lower than a set value or be maintained at the set value. If there are a plurality of signals for detection of bit error, it should be detected by the signal of the highest frequency among them. The reason is same as when detecting the noise level, and its mode is explained by reference to the frequency spectrum in Fig. 6. In Fig. 6, numeral 40 denotes a frequency multiplexed transmission signal to be transmitted originally, and 40-1 of it is a bit error detection signal which is a digital modulated signal to be detected of bit error, and 50 is a disturbing wave by beat interference. The state in Fig. 6 is assumed that the bit error rate in the bit error detection signal 40-1 is at an allowable limit. When the disturbing wave 50 becomes closer to the transmission signal 40 from this state on the frequency axis, and the foot of the disturbing wave 50 affects the bit error detection signal 40-1 and is detected as a bit error beyond the allowable limit by the detecting part 3, the light source part 5 is controlled through the control part 4, and the wavelength of the output light signal 16 is changed so that the bit error signal may not increase further, thereby maintaining the relation as shown in Fig. 6, and the effect of the disturbing wave 50 on the transmission signal 40 becomes a negligible level lower than the set error rate. Therefore, same as in the case of monitoring the noise level, the bit error should be detected by the signal of high frequency as far as possible.

In the case of detection of bit error, if signal of high frequency is not available as a bit error detection signal capable of detecting a bit error, or if there is no bit error detection signal capable of detecting a bit error at all, or if it is difficult, a signal for detection capable of easily detecting a bit error should be added. At this time, as shown in Fig. 7, it is desired to set the detection signal 41 at a higher frequency than the transmission signal 40. The reason of setting at high frequency is same as mentioned above.

As the signal for detecting a bit error rate, either same or different ones may be used in the individual fiber optic communication terminals, but when same ones are used, it is necessary to adjust and change the set value of the bit error rate in each fiber optic communication terminal. Generally, the worse value should be set at the upstream side closer to the center station 105.

In this embodiment, it is controlled so as to maintain the target noise level or error rate, but if the margin is insufficient, the detection level of noise level or error rate must be set lower, and it is technically difficult to detect the value directly. If such problem exists, when the noise level or error rate larger than the set level is detected, instead of maintaining the wavelength of the output light signal 16 at the wavelength at that time, it should be changed by a specified portion to the direction of not causing beat interference from that wavelength. For such control, as the control part 4, computer control using a microcomputer is suited. In such a method, however, if the wavelength is changed suddenly as in frequency hop, the fiber optic communication terminal at the upstream side (the center station 105 side) cannot follow the change, and normal operation may not be expected. Therefore, it is necessary to change gradually at a certain time constant so as to avoid sudden change. In this method, a sufficient margin can be maintained, and the detection level of noise level or error rate can be set somewhat larger, and the circuit may be realized easily.

When the fiber optic communication system as shown in Fig. 2 is composed by using the fiber optic communication terminals of the invention, generally, the normal state may be maintained by the operation as mentioned above, but once falling in abnormal wavelength configuration status due to blackout, system breakdown or other abnormality, the normal state may not be always restored if the same operation as mentioned above is done independently in the fiber optic communication terminals. For example, if the wavelength of the output light signal of a certain fiber optic communication terminal is enclosed by two wavelengths of output light signals of two downstream side fiber optic communication terminals, and if this interval is so small that another wavelength signal cannot normally exist in, it is impossible to get out of these two wavelengths in the above operation. In such situation, if it is detected that it is impossible to get out of the two wavelengths, the wavelength should be changed by force to such an extent as to be capable of getting out of the two wavelengths. Detection of such situation may be judged when the signal quality does not achieve the desired level if the control part 4 operates continuously longer than a specific set time. The control part 4 judges the abnormal state if the signal quality does not reach the desired level if continued to operate longer than a specific set time, and changes the output signal wavelength of the light source part 5 by force by a set amount. When each fiber optic communication terminal possesses this function, if the entire system falls in an abnormal state, a normal state can be restored as each fiber optic communication terminal operates independently. From the viewpoint of realizing such function, too, computer control using a microcomputer is suited as the control part 4.

As the fiber optic communication system, the technique for arranging the light output wavelengths of all fiber optic communication terminals is explained below by reference to Fig. 2.

The fiber optic communication terminals 100-1 to 100-n operate to change continuously the wavelengths until the signal quality reaches the set value individually, and moreover when receiving a start command of initialization operation, each one starts the above operation from the end of either long wavelength side or short wavelength side of the wavelength variable range of the own light source part. Which end to start operation from may be determined in each system. The set value of the signal quality is, as a matter of course, the level where normal operation is enabled.

An example of a technique is explained below. In the first place, the center station 105 sends a start command of initialization operation to all fiber optic communication terminals 100-1 to 100-n by some means. Upon receiving the start command, the fiber optic communication terminal 100-n at the most downstream side first sets the wavelength of its own light output. In this case, it is set in the shortest wavelength in the wavelength variable range. Consequently, the second fiber optic communication terminal from the downstream side starts from the longest wavelength, and continues to change the wavelength to the shorter wavelength side until the signal quality of the light output becomes a set value. In such action, normal operation is possible, and the wavelength arrangement as close as possible may be realized and maintained. Similarly, in the third and subsequent fiber optic
communication terminals, the same operation as above is done sequentially at time intervals specified by a timer or the like. In this way, the wavelengths can be arranged at high density as far as possible, and the number of multiplexes is more than the case of sorting the wavelengths of the light source part by taking the margin into consideration, that is, the number of fiber optic communication terminals that can be connected can be increased.

Incidentally, instead of setting the wavelength of the light output of the fiber optic communication terminal 100-n at the most downstream side at the shortest wavelength side as mentioned above, it may be also possible to start operation from the other fiber optic communication terminal of the shorter wavelength side by setting at the longest wavelength side. Otherwise, the wavelength of the fiber optic communication terminal 100-n at the most downstream side may be set at an intermediate value of the wavelength variable range, and the operation may be started from the long wavelength end or short wavelength end where the other terminal is designated. Anyway, the fiber optic communication terminal 100-n at the most downstream side affects the entire system, and therefore the light output signal of predetermined wavelength must be produced stably, and the stability of the wavelength is particularly demanded because there is no input light signal to the own station.

As shown in Fig. 8, a similar fiber optic communication system is realized by connecting the fiber optic communication terminals 100-1 to 100-n and a center station 205 capable of producing a center output light signal 200 in a ring form through optical fibers. By connecting in a ring form, it is easy to send the information from the center station 205, for example, the start command of initialization action as mentioned above, to the fiber optic communication terminals 100-1 to 100-n. Moreover, in the former example of wavelength arrangement method, the fiber optic communication terminal 100-n at the most downstream side determined the initial value of the wavelength arrangement, but when connected in a ring form, the center station 205 can determine the initial value of wavelength by producing the center output light signal 200. Hence, particular action is not needed in the fiber optic
communication terminal 100-n at the most downstream side, and all fiber optic communication terminals 100-1 to 100-n can operate alike. Except when the center station 205 determines the initial value of wavelength, the operation is same as the fiber optic communication system. If desired to shift the wavelength during operation, the wavelength of the center output light signal 200 can be changed gradually, so that it is possible to shift the wavelength of the entire fiber optic communication system while maintaining the high density arrangement.

## Claims

1. A fiber optic communication terminal in a fiber optic communication system comprising a plurality of such fiber optic communication terminals and a center station and in which light signals from said plurality of terminals are mixed and finally sent to the center station as one light signal, comprising:
a light source part (5) for producing a light signal (16)
a light mixing part (1) for mixing a light signal (10) input from outside and the light signal (16) output by the light source part (5),
a light branching part (2) for branching the mixed light signal (11) output by the light mixing part (1) into two, and sending out one thereof as a terminal output light signal (12) to outside,
a detecting part (3) for detecting the deterioration of signal quality of the other branched light signal (13) output by the light branching part (2) and producing a detection signal (14), and
a control part (4) for controlling the wavelength of the light signal (16) output by the light source part (5) depending on the detection signal (14) output by the detecting part (3), so as to reduce the deterioration of signal quality.

2. A fiber optic communication terminal of claim 1, wherein the functions of the light mixing part (1) and light branching part (2) are combined and realized by one fusion type optical coupler.

3. A fiber optic communication terminal of claim 1, wherein the functions of the light mixing part (1) and light branching part (2) are combined and realized by one waveguide type optical coupler.

4. A fiber optic communication terminal of claim 1, wherein the detecting part (3) detects a bit error rate of branched light signal (13) of its input, and produces a detection signal (14) depending on the bit error rate, and the signal modulating the light signal (16) is a frequency multiplexed signal, and at least one carrier is digitally modulated, and the detecting part (3) detects the bit error rate of digitally modulated light signal of the highest frequency among the carriers, and produces a detection signal (14) depending on the bit error rate.

5. A fiber optic communication terminal of claim 1, wherein the detecting part (3) detects a bit error rate of branched light signal (13) of its input and produces a detection signal (14) depending on the bit error rate, and the signal (10) to be transmitted originally, modulating the output light signal (16), is combined with a signal for detection of bit error rate higher in frequency than the signal, and the detecting part (3) detects the bit error rate of the signal (13) for detection of bit error rate, and produces a detection signal (14) depending on the detected bit error rate.

6. A fiber optic communication terminal of claim 1, wherein the wavelength of the output light (16) of the light source part (5) at the time of detection of deterioration of signal quality of the branched light signal (13) by the detecting part (3) is changed by a preset value so as to maintain the same state.

7. A fiber optic communication terminal of claim 1, wherein the detecting part (3) detects deterioration of signal quality of the branched light signal (13), changes the wavelength of output light (16) of the light source part (5) through the control part (4) and continues to operate for a preset time in order to decrease or maintain the deterioration of the signal quality, but if the deterioration of the signal quality cannot be decreased or maintained, the wavelength of output light (16) of the light source part (5) is changed by a preset amount at that time, and the action to change the wavelength of output light (16) of the light source part (5) is continued thereafter.

8. A fiber optic communication system comprising a plurality of fiber optic communication terminals of claim 1 and one center station, being connected in cascade through optical fibers, wherein the center station is at one end, and it is designed so that light signals may be received from all fiber optic communication terminals.

9. A fiber optic communication system comprising a plurality of fiber optic communication terminals of claim 1 and one center station, being connected annularly in cascade through optical fibers, wherein the light signals from all fiber optic communication terminals are received by the center station, and it is designed so that the light signal from the center station is fed into the plurality of fiber optic communication terminals, wherein the center station can change a wavelength of its light input.

10. A method of setting the wavelength for a fiber optic communication system in a fiber optic communication system comprising a plurality of fiber optic communication terminals of claim 1 and one center station, being connected in cascade through optical fibers, wherein the center station is at one end, and it is designed so that light signals may be received from all fiber optic communication terminals, in which with respect to the wavelength of the output light determined by the fiber optic communication terminal at the side remotest from the center station, all the other fiber optic communication terminals from the fiber optic communication terminal at the most downstream side are sequentially set at the wavelength relatively distant by a preset wavelength, and said distance between the wavelengths of the output lights is set so as to keep the value of the signal quality of the output light signal.

11. A method of setting wavelength for fiber optic communication system in a fiber optic communication system comprising a plurality of fiber optic communication terminals of claim 1 and one center station, being connected annularly in cascade through optical fibers, wherein the light signals from all fiber optic communication terminals are received by the center station, and it is designed so that the light signal from the center station is fed into the plurality of fiber optic communication terminals, in which with respect to the wavelength of the output light determined by the light signal from the center station, all fiber optic communication terminals from the fiber optic communication terminal closest to the output side of the center station to the fiber optic communication terminals at the side nearer to the center station are sequentially set at the wavelength relatively distant by a preset wavelength, and said distance between the wavelengths of the output lights is set so as to keep the value of the signal quality of the output light signal.

## Patentansprüche

1. Faseroptisches Kommunikationsendgerät in einem faseroptischen Übertragungssystem, das mehrere dieser faseroptischen Kommunikationsendgeräte sowie eine Mittelstation enthält, und in dem Lichtsignale von den mehreren Endgeräten gemischt und schließlich zur Mittelstation als ein Lichtsignal gesendet werden, enthaltend:
einen Lichtquellenteil (5) zum Erzeugen eines Lichtsignals (16),
einen Lichtmischteil (1) zum Mischen einer Lichtsignal-Eingabe (10) von außerhalb mit dem Lichtsignal, das vom Lichtquellenteil (5) ausgegeben wird,
einen Lichtverzweigungsteil (2) zum Verzweigen des gemischten Lichtsignals (11), das vom Lichtmischteil (1) ausgegeben wird, in zwei Signale, und um eines der beiden als Endgerät-Ausgabe-Lichtsignal (12) nach außen zu senden,
einen Detektorteil (3) zum Erfassen der Störung der Signalqualität des anderen abgezweigten Lichtsignals (13), das von dem Lichtverzweigungsteil (2) ausgegeben wird, und zum Erzeugen eines Detektorsignals (14), und
einen Steuerteil (4) zum Steuern der Wellenlänge des Lichtsignals (16), das vom Lichtquellenteil (5) ausgegeben wird, in Abhängigkeit des Detektorsignals (14), das vom Detektorteil (3) ausgegeben wird, derart daß die Störung der Signalqualität vermindert wird.

2. Faseroptisches Kommunikationsendgerät nach Anspruch 1, bei dem die Funktionen des Lichtmischteils (1) und des Lichtverzweigungsteils (2) kombiniert und durch einen optischen Koppler vom Verschmelzungstyp realisiert sind.

3. Faseroptisches Kommunikationsendgerät nach Anspruch 1, bei dem die Funktionen des Lichtmischteils (1) und des Lichtverzweigungsteils (2) kombiniert und durch einen optischen Koppler vom Wellenleitertyp realisiert sind.

4. Faseroptisches Kommunikationsendgerät nach Anspruch 1, bei dem der Detektorteil (3) eine Bit-Fehlerrate des abgezweigten Lichtsignals (13) seines Eingangs erfaßt und ein Detektorsignal (14) in Abhängigkeit der Bit-Fehlerrate erzeugt, und das Signal, das das Lichtsignal (16) moduliert ein frequenz-multiplexiertes Signal ist und wenigstens ein Träger digital moduliert wird, und der Detektorteil (3) die Bit-Fehlerrate des digital modulierten Lichtsignals der höchsten Frequenz unter den Trägern erfaßt und ein Detektorsignal (14) in Abhängigkeit der Bit-Fehlerrate erzeugt.

5. Faseroptisches Kommunikationsendgerät nach Anspruch 1, bei dem der Detektorteil (3) eine Bit-Fehlerrate des abgezweigten Lichtsignals (13) seines Eingangs erfaßt und ein Detektorsignal (14) in Abhängigkeit der Bit-Fehlerrate erzeugt, und das Signal (10), das im ürsprünglich übertragen werden soll und das Ausgabe-Lichtsignal (16) moduliert, mit einem Signal zum Erfassen einer Bit-Fehlerrate mit höherer Frequenz als das Signal kombiniert wird, und der Detektorteil (3) die Bit-Fehlerrate des Signals (13) zum Erfassen der Bit-Fehlerrate erfaßt und ein Detektorsignal (14) in Abhängigkeit der erfaßten Bit-Fehlerrate erzeugt.

6. Faseroptisches Kommunikationsendgerät nach Anspruch 1, bei dem die Wellenlänge des ausgegebenen Lichts des Lichtquellenteils (5) zum Zeitpunkt des Erfassens der Störung der Signalqualität des abgezweigten Lichtsignals (13) durch den Detektorteil (3) um einen voreingestellten Wert geändert wird, so daß derselbe Zustand beibehalten wird.

7. Faseroptisches Kommunikationsendgerät nach Anspruch 1, bei dem der Detektorteil (3) die Störung der Signalqualität des abgezweigten Lichtsignals (13) erfaßt, die Wellenlänge des ausgegebenen Lichts (16) des Lichtquellenteils (5) durch den Steuerteil (4) ändert und mit dem Betrieb für eine voreingestellte Zeitdauer fortfährt, um die Störung der Signalqualität beizubehalten oder zu verbessern, bei dem jedoch, wenn die Störung der Signalqualität nicht vermindert oder beibehalten werden kann, die Wellenlänge des ausgegebenen Lichts (16) des Lichtquellenteils (5) zu diesem Zeitpunkt um ein vorbestimmtes Ausmaß geändert wird und der Vorgang zum Ändern der Wellenlänge des ausgegebenen Lichts (16) des Lichtquellenteils (5) daraufhin fortgesetzt wird.

8. Faseroptisches Übertragungssystem, enthaltend mehrere faseroptische Kommunikationsendgeräte nach Anspruch 1 und eine Mittelstation, die kaskadenartig durch optische Fasern verbunden sind, wobei sich die Mittelstation an einem Ende befindet und derart ausgebildet ist, daß Lichtsignale von allen faseroptischen Kommunikationsendgeräten empfangen werden können.

9. Faseroptisches Übertragungssystem, enthaltend mehrere faseroptische Kommunikationsendgeräte nach Anspruch 1 und eine Mittelstation, die ringförmig kaskadenartig durch optische Fasern verbunden sind, wobei die Lichtsignale von allen faseroptischen Kommunikationsendgeräten von der Mittelstation empfangen werden und diese so ausgebildet ist, daß das Lichtsignal von der Mittelstation der Anzahl von faseroptischen Kommunikationsendgeräten zugeführt wird und die Mittelstation die Wellenlänge ihrer Lichteingabe ändern kann.

10. Verfahren zum Einstellen der Wellenlänge für ein faseroptisches Übertragungssystem in einem faseroptischen Übertragungssystem, enthaltend mehrere faseroptische Kommunikationsendgeräte nach Anspruch 1 und eine Mittelstation, die kaskadenartig durch optische Fasern verbunden sind, wobei sich die Mittelstation an einem Ende befindet und derart ausgebildet ist, daß Lichtsignale von allen faseroptischen Kommunikationsendgeräten empfangen werden können; bei dem mit Bezug auf die Wellenlänge des ausgegebenen Lichts, die mit dem faseroptischen Kommunikationsendgerät an der Seite, die am weitesten von der Mittelstation entfernt ist, ermittelt wird, alle weiteren faseroptischen Kommunikationsendgeräte vom faseroptischen Kommunikationsendgerät an der stromabwärtigsten Seite nacheinander auf die Wellenlänge eingestellt werden, die durch eine vereingestellte Wellenlänge relativ entfernt ist, und die Distanz zwischen den Wellenlängen der ausgegebenen Lichter so eingestellt wird, daß der Wert der Signalqualität des ausgegebenen Lichtsignals beibehalten wird.

11. Verfahren zum Einstellen der Wellenlänge für ein faseroptisches Übertragungssystem in einem faseroptischen Übertragungssystem, enthaltend mehrere faseroptische Kommunikationsendgeräte nach Anspruch 1 und eine Mittelstation, die ringförmig kaskadenartig durch optische Fasern verbunden sind, wobei die Lichtsignale von allen faseroptischen Kommunikationsendgeräten von der Mittelstation empfangen werden und diese so ausgebildet ist, daß das Lichtsignal von der Mittelstation der Vielzahl der faseroptischen Kommunikationsendgeräte zugeführt wird; bei dem mit Bezug auf die Wellenlänge des ausgegebenen Lichts, die mit dem Lichtsignal von der Mittelstation ermittelt wird, alle faseroptischen Kommunikationsendgeräte vom faseroptischen Kommunikationsendgerät, das sich am nächsten zur Ausgabeseite der Mittelstation befindet bis zu den faseroptischen Kommunikationsgeräten auf der näher zur Mittelstation gelegenen Seite nacheinander auf die Wellenlänge relativ unterschiedlich um eine vorgegebene Wellenlänge eingestellt werden und dieser Unterschied zwischen den Wellenlängen des ausgegebenen Lichts so eingestellt wird, daß der Wert der Signalqualität des abgegebenen Lichtsignals beibehalten wird.

## Revendications

1. Terminal de communication par fibres optiques dans un système de communication par fibres optiques comprenant une pluralité des terminaux de communication par fibres optiques et un poste central et dans lequel les signaux lumineux provenant de ladite pluralité de terminaux sont mélangés et enfin transmis vers le poste central sous la forme d'un seul signal lumineux, comprenant :
une partie de source lumineuse (5) permettant de produire un signal lumineux (16),
une partie de mélange de signaux lumineux (1) permettant de mélanger un signal lumineux (10) entré à partir de l'extérieur et le signal lumineux (16) émis en sortie par la partie de source lumineuse (5),
une partie de dérivation de lumière (2) pour diviser en deux signaux le signal lumineux mixte (11) émis en sortie par la partie de mélange de signaux lumineux (1) et émettre l'un d'eux sous la forme d'un signal lumineux de sortie de terminal (12) vers l'extérieur,
une partie de détection (3) permettant de détecter la détérioration de la qualité de signal de l'autre signal lumineux divisé (13) émis en sortie par la partie de dérivation de lumière (2) et de produire un signal de détection (14), et
une partie de contrôle (4) permettant de contrôler la longueur d'onde du signal lumineux (16) émis en sortie par la partie de source lumineuse (5) en fonction du signal de détection (14) émis en sortie par la partie de détection (3) afin de réduire la détérioration de la qualité de signal.

2. Terminal de communication par fibres optiques selon la revendication 1, dans lequel les fonctions de la partie de mélange de signaux lumineux (1) et de la partie de dérivation de lumière (2) sont combinées et exécutées par un coupleur optique de type à fusion.

3. Terminal de communication par fibres optiques selon la revendication 1, dans lequel les fonctions de la partie de mélange de signaux lumineux (1) et de la partie de dérivation de lumière (2) sont combinées et exécutées par un coupleur optique de type à guide d'onde.

4. Terminal de communication par fibres optiques selon la revendication 1, dans lequel la partie de détection (3) détecte un taux d'erreurs binaires pour le signal lumineux divisé (13) de son entrée et produit un signal de détection (14) en fonction du taux d'erreurs binaires, et le signal modulant le signal lumineux (16) est un signal multiplexé en fréquence et au moins une porteuse est numériquement modulée et la partie de détection (3) détecte le taux d'erreurs binaires du signal lumineux modulé numériquement présentant la fréquence la plus élevée parmi les porteuses et produit un signal de détection (14) en fonction du taux d'erreurs binaires.

5. Terminal de communication par fibres optiques selon la revendication 1, dans lequel la partie de détection (3) détecte un taux d'erreurs binaires pour le signal lumineux divisé (13) de son entrée et produit un signal de détection (14) en fonction du taux d'erreurs binaires, et le signal (10) à transmettre à l'origine, modulant le signal lumineux de sortie (16) est combiné à un signal de détection d'un taux d'erreurs binaires d'une fréquence plus élevée que le signal, et la partie de détection (3) détecte le taux d'erreurs binaires du signal (13) pour la détection du taux d'erreurs binaires et produit un signal de détection (14) en fonction du taux d'erreurs binaires détecté.

6. Terminal de communication par fibres optiques selon la revendication 1, dans lequel la longueur d'onde de la lumière de sortie (16) de la source lumineuse (5) au moment de la détection de la détérioration de la qualité de signal du signal lumineux divisé (13) par la partie de détection (3) est modifiée d'une valeur prédéfinie afin de conserver le même état.

7. Terminal de communication par fibres optiques selon la revendication 1, dans lequel la partie de détection (3) détecte la détérioration de la qualité de signal du signal lumineux divisé (13), modifie la longueur d'onde de la lumière de sortie (16) de la partie de source lumineuse (5) par l'intermédiaire de la partie de contrôle (4) et continue de fonctionner pendant une durée prédéfinie afin de réduire ou de maintenir la détérioration de la qualité du signal mais si la détérioration de la qualité de signal ne peut être réduite ou maintenue, la longueur d'onde de la lumière de sortie (16) de la partie de source lumineuse (5) est modifiée à ce moment d'une valeur prédéfinie et l'action permettant de modifier la longueur d'onde de la lumière de sortie (16) de la partie de source lumineuse (5) se poursuit ensuite.

8. Système de communication par fibres optiques comprenant une pluralité de terminaux de communication pour fibres optiques selon la revendication 1 et un poste central, connectés en cascade par des fibres optiques, dans lequel le poste central est à une extrémité et il est conçu de telle sorte que les signaux lumineux puissent être reçus de tous les terminaux de communication pour fibres optiques.

9. Système de communication par fibres optiques comprenant une pluralité de terminaux de communication par fibres optiques selon la revendication 1 et un poste central, connectés de manière annulaire en cascade par des fibres optiques, dans lequel les signaux lumineux en provenance de tous les terminaux de communication par fibres optiques sont reçus par le poste central et il est conçu de telle sorte que le signal lumineux en provenance du poste central est introduit dans la pluralité des terminaux de communication par fibres optiques, dans lequel le poste central peut modifier une longueur d'onde de son entrée lumineuse.

10. Procédé de réglage de la longueur d'onde pour un système de communication par fibres optiques dans un système de communication par fibres optiques comprenant une pluralité de terminaux de communication par fibres optiques selon la revendication 1 et un poste central, connectés en cascade par des fibres optiques, dans lequel le poste central est à une extrémité et il est conçu de telle sorte que les signaux lumineux puissent être reçus par tous les terminaux de communication par fibres optiques, dans lequel, en ce qui concerne la longueur d'onde de la lumière de sortie déterminée par le terminal de communication par fibres optiques du côté le plus éloigné du poste central, tous les autres terminaux de communication par fibres optiques depuis le terminal de communication pour fibres optiques du côté le plus en aval sont réglés séquentiellement à la longueur d'onde relativement distante d'une longueur d'onde prédéfinie, et ladite distance entre les longueurs d'onde des lumières de sortie est réglée de manière à conserver la valeur de la qualité de signal du signal lumineux de sortie.

11. Procédé de réglage de la longueur d'onde pour un système de communication par fibres optiques dans un système de communication par fibres optiques comprenant une pluralité de terminaux de communication par fibres optiques selon la revendication 1 et un poste central, connectés en cascade de façon annulaire par des fibres optiques, dans lequel les signaux lumineux provenant de tous les terminaux de communication par fibres optiques sont reçus par le poste central, et il est conçu de telle sorte que le signal lumineux provenant du poste central soit introduit dans la pluralité de terminaux de communication par fibres optiques, dans lequel, en ce qui concerne la longueur d'onde de la lumière de sortie déterminée par le signal lumineux issu du poste central, tous les terminaux de communication par fibres optiques depuis le terminal de communication par fibres optiques le plus proche du côté de sortie du poste central jusqu'aux terminaux de communication par fibres optiques du côté le plus proche du poste central sont réglés séquentiellement à la longueur d'onde relativement distante d'une longueur d'onde prédéfinie, et ladite distance entre les longueurs d'onde des lumières de sortie est réglée de manière à conserver la valeur de la qualité de signal du signal lumineux de sortie.
